Europäisches Patentamt

European Patent Office

Office européen des brevets

(19)

(11) **EP 1 235 181 A2**

(12) **EUROPEAN PATENT APPLICATION**

(43) Date of publication:
28.08.2002 Bulletin 2002/35

(51) Int Cl.⁷: **G06T 3/00**, H04N 1/387

(21) Application number: **01310728.9**

(22) Date of filing: **20.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.02.2001 GB 0104664**

(71) Applicant: **Hewlett-Packard Company**
**Palo Alto, CA 94304 (US)**

(72) Inventor: **Pilu, Maurizio**
**Bristol BS7 0RJ (GB)**

(74) Representative: **Lawrence, Richard Anthony et al**
**Hewlett-Packard Limited,**
**IP Section,**
**Building 3,**
**Filton Road**
**Stoke Gifford, Bristol BS34 8QZ (GB)**

(54) **Improvements relating to document capture**

(57) A method of and apparatus for at least partially removing the effects of perspective distortion from a captured image of a document containing text is disclosed. Real or illusionary text lines are identified in the captured documents. The lines are grouped into line bundles and the dominant bundle is selected. The characteristics of the dominant bundle are used to generate a transform which partially removes the effect of perspective in the document. The transform when applied has the effect of making horizontal lines in the original document parallel in the processed image. The method may also comprise identifying a single vertical clue or line in the captured image and processing at least one characteristic of the vertical clue with the characteristics of the dominant line bundle and the focal length of the camera that captured the image to produce a vertical transform. The vertical transform, if combined with the line bundle transform produces a processed image in which all lines corresponding to vertical lines from the original document are parallel. The invention also comprises restoring the aspect ratio of a captured image from a combination of two horizontal lines and two vertical lines in the captured document together with a knowledge of the focal length of the camera.

*Fig. 2*

EP 1 235 181 A2

**Description**

This invention relates generally to document capture. More particularly the invention relates to a method of at least partially removing the effects of perspective distortion from a captured image of a document containing text, and in particular to a method of producing an electronic image of a text document that is viewed at an oblique angle using a digital camera. It also relates to image processing apparatus adapted to correct perspective distortions in a captured image of a text document.

With the steady decrease in the cost of electronic memory, it is becoming increasingly common to create electronic copies of paper documents. The electronic copy comprises a captured image which can be stored in the electronic memory. It can then be transmitted electronically across a communication network. Also, in the case of text documents the captured image can be processed using proprietary character recognition software to produce a machine editable document.

The most widely available device for capturing images of paper documents is the flat bed scanner. Flat-bed scanners generally have a glass platen onto which the document to be captured is placed. A detector is then scanned over the document. Whilst these devices have proven extremely successful they do occupy a large area of precious deskspace. This can be a problem in a restricted work environment such as a busy office or home study.

An alternative to the flat bed scanner is to use a digital camera -comprising a detector and a lens - to capture the image of the document. In use, the document is placed in the field of view of the camera and in the focal plane of the lens. The lens directs light from the document onto the detector. In some arrangements the camera may scan across the document with a complete captured image being constructed from a mosaic of smaller captured sub-images.

The use of a camera to capture an image of an original document removes the need for a platen and as such frees up the deskspace that would have been occupied by a flat-bed scanner. However, by removing the platen many new problems arise which must be addressed if a useful captured image is to be obtained.

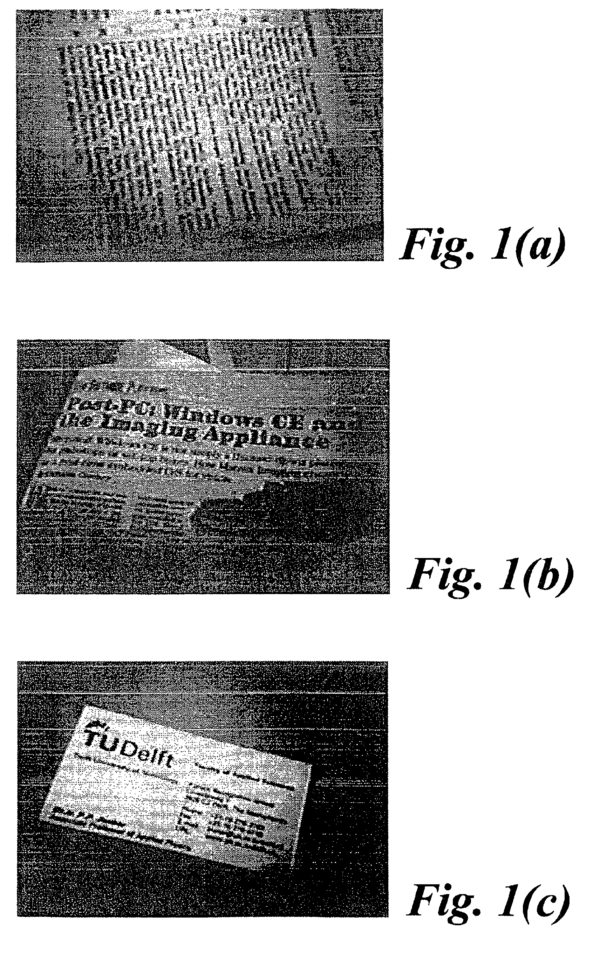

One of the main disadvantages when capturing a document with a camera is that the non-contact image capture process causes distortion effects dependent upon the relative position of the document with respect to the camera and its parameters. Figure 1 shows three typical (if rather accentuated) examples of captured images of a document which has been captured with a camera set at an oblique angle with respect to the plane of the document. The effects of perspective distortions can be clearly seen. Rotational effects are also apparent with the captured images not being upright.

Perspective distortion effects are more complicated to eliminate from a captured image than the simple rotational distortion that arises when using a flatbed scanner. Much work has been undertaken to develop methods of compensating for the problem of rotation. An example of a solution to the problem of rotation is disclosed in US528387.

The problem of distortion of a captured image of a text document due to perspective has been eliminated in the past by supporting the camera at a fixed orientation with respect to a surface upon which a document is to be placed. Provided that the camera is square onto the centre of the document an image can be captured that is largely free of the effect of perspective distortions. Only rotation effects are present and can readily be removed using techniques developed for scanners.

A problem with such a fixed position system is that it considerably limits the usefulness of the camera based image capture apparatus. The document must always be placed in the correct position on the worksurface, and a rigid stand must be provided.

The applicant has appreciated the benefits of providing a document capture apparatus which allows images to be captured from a camera at an oblique angle.

It is known to provide image processing software which will remove some of the effects of perspective from a captured image by searching for a quadrilateral within the image. This may comprise the perimeter of a page or the edge of a whiteboard. Once the quadrilateral is identified, a transform is produced which maps the image onto a new plane where the quadrilateral is warped onto a rectangle of known aspect ratio. To function correctly, the relative length and height of the sides of the quadrilateral must be known or estimated to allow the aspect ratio to be correctly recovered.

Although the use of an identified quadrilateral works well for removing perspective effects from many captured images, the technique of identifying quadrilaterals is of limited practical use when processing images of text documents. The user may have positioned the camera so that the edges of the document do not form part of the captured image. If the document contains purely text information then there will be no other identifiable quadrilaterals in the captured image that can be used as the basis of generating the required transform.

It is accordingly one object of the invention to provide a method of correcting a captured image of a document containing text that obtained at an oblique incidence to remove, at least partially, the effects of perspective distortion.

In accordance with a first aspect the invention provides a method of at least partially removing the effect of perspective distortion from a captured image of a document viewed at an oblique angle, the method comprising the steps of:

(a) identifying real and illusionary text lines within the captured image;

(b) identifying at least one line bundle in the captured image, the line bundle comprising at least two real or illusionary text lines identified in the image which converge towards a single point; and

(c) generating a line bundle transform for the captured image based upon one or more of the characteristics of the identified line bundle which when applied to the captured image generates a processed image in which any real or illusionary lines in the identified line bundle are parallel.

The applicant has appreciated that the perspective distortion of a captured image causes parallel lines in the image to converge towards a vanishing point. The method of the first aspect of the invention identifies this effect of perspective distortion and compensates for the effect to remove some of the perspective distortion from the captured image.

The one or more characteristics may include the position of the line bundle in the captured image and the relative position of the point towards which the lines of the bundle converge.

Most text documents contain characters forming words which can be identified as text lines. Several words may be aligned in a row to form sentences. These can also be considered to define text lines in the captured image. Because there are often many such text lines a large line bundle can be identified that has many member lines in the captured image. Smaller line bundles containing converging lines that are vertical in the original document may also be located but this bundle will generally contain very few lines.

The method may therefore comprise identifying the dominant bundle in the captured image and producing the line bundle transform based on one or more of the characteristics of this dominant bundle.

The dominant bundle may be identified as the line bundle containing the greatest number of real or illusionary lines in the captured image. The method may include the steps of identifying all line bundles in the captured image, comparing the number of lines in the captured image corresponding to each line bundle, and retaining the line bundle containing the greatest number of real or illusionary lines.

By identifying the dominant line bundle and generating a suitable transform from one or more characteristics of the dominant line bundle the perspective effect of horizontal distortion produced when the capture camera is obliquely inclined to the plane of the original document plane can at least partially be removed.

The present invention is advantageous over the prior art solutions based on quadrilaterals when processing documents that may contain only text. In such documents quadrilaterals can not always be identified due to the lack of suitable vertical lines. Nevertheless, the present invention is able to remove some of the perspective effects present in the captured image without the need to identify quadrilaterals. Of course, the original document may also contain non-textual information such as drawings.

By illusionary horizontal line we may mean a group of characters arranged in a horizontal row to form a word in the document, or a group of words forming a line of text. The term horizontal refers to the inclination of the document when read by a reader, with lines of text by convention being disposed across a page from left to right or vice versa depending upon the character set used.

The method may further comprise the step of generating a rotation transform which may be applied together with the line bundle transform to generate a processed image in which the parallel lines of the dominant line bundle extend horizontally.

As described hereinbefore, each of the identified lines forming the dominant line bundle will typically correspond to spaced characters and numerals set out in horizontal rows to form words or sentences in the original document. Transforming the captured image to make these lines horizontal will have the effect of correcting the orientation of the capture document.

The line bundle transform and the rotation transform may comprise mapping functions which map each point in the plane of the captured image onto a corresponding point in a plane of the processed image. Alternatively, the rotation transform may first be applied to map the points in the captured image onto an intermediate plane with the rotation transform comprising a mapping function which maps each point in the intermediate plane onto a corresponding point in the plane of the processed image. Of course, in a further alternative, the rotation may be applied first or they may both be combined as a single mapping function.

The method may comprise generating the line bundle transform by determining the line vector for a first line in the dominant line bundle, determining the line vector for a second line in the dominant line bundle, determining the point in the plane of the captured image at which the two line vectors intersect, and mapping the image onto a new plane in which the point of intersection is projected to a point at infinity.

The method of the present invention substantially removes the effect of perspective distortion of horizontal lines from the captured image. It may also (optionally) rotate the image to its upright position based upon knowledge of the characteristics of an identified dominant line bundle. However, there may still be some residual perspective effects in the processed image associated with an oblique angle of incidence of the captured image relative to the vertical axis in the plane of the original document. These residual effects distort the captured image (relative to the original document) so that vertical lines in the captured image are not orthogonal to the horizontal lines.

In order to at least partially remove the residual distortion from the processed image, the method may include the further steps of identifying a line bundle in the captured image corresponding to vertical lines in the original image, the line bundle including at least two real or imaginary lines identified in the captured image which converge to a single point, and generating a second line bundle transform based upon the characteristics of this second line bundle.

In effect, the method used to make the horizontal lines parallel may be repeated to make the vertical lines parallel.

Whilst a "vertical" line bundle can be used to remove the effects of perspective distortion on the vertical lines it requires the presence of at least two real or illusionary vertical lines in the original image. Often, a document will only contain one vertical line where blocks of text have been left-hand justified.

Thus, in an alternative the method may include the steps of:

   detecting at least one real or illusionary line in the captured image which corresponds to a real or illusionary vertical line in the original document,
   determining a mapping value dependent upon one or more properties of the camera which captured the image, and generating a vertical transform by combining the mapping value with one or more characteristics of the at least one vertical line and one or more characteristics of the horizontal line bundle.

By vertical lines it will be understood that we mean any real or illusionary lines present in the original document which are orthogonal to the horizontal lines.

The one or more properties of the camera may include the focal length of the camera. Indeed, it may be equal to the focal length of the camera.

The method may subsequently include the step of applying the vertical transform to the captured image to produce a processed image in which the vertical line and any lines in the original image that are parallel to that identified line are parallel in the processed image.

Of course, it will be understood that the method of removing perspective effects associated with vertical lines is not limited to cases in which the perspective effects associated with horizontal lines have initially been removed by identifying line bundles. All that is required is a knowledge of the characteristics of at least two lines in the captured image that correspond to horizontal lines in the original document.

Therefore, in accordance with a second aspect the invention provides a method adapted at least partially to remove perspective distortion in a captured image generated using a camera aligned at an oblique angle to the plane of an original document, the method comprising the steps of:

   detecting at least two real or illusionary text lines in the image of the document, the detected text lines corresponding to two real or illusionary horizontal text lines in the original document,
   detecting at least one real or illusionary line in the image of the document, the detected line corresponding to a real or illusionary vertical line in the original document,
   determining a mapping value dependent upon the focal length of the camera for the captured image,
   and generating a vertical transform by combining the mapping value with one or more characteristics of the two horizontal text lines and one or more characteristics of the vertical line.

The one or more characteristics of the horizontal and/or vertical lines may include the position of the lines in the image and the orientation of the lines.

The method may subsequently include the step of applying the vertical transform to the captured image to generate a processed image in which the vertical line and any lines in the original image that are parallel to that vertical line are orthogonal to the horizontal lines. The transform therefore maps all points in the captured image to new points in the processed image-in effect "warping" the captured image.

The need for only a single vertical line or "clue" is especially advantageous as it has been established that many documents containing predominantly text may only include one such vertical clue. Methods based on identifying quadrilaterals are therefore unsuitable. Indeed, alternatives such as the identification of line bundles will also not be suited to removing the vertical distortions.

In the method of the first aspect of the invention, or the method of the second aspect, it is most preferred that the method step of identifying the vertical line is performed on the processed image produced after the application of the horizontal transform and the rotational transform.

It will be readily understood by the skilled person that the vertical line may comprise a line of text characters or words or numerals arranged directly above one another in the text document. The vertical "clue" may comprise other features of the document that perceptually indicate a vertical line, such as the alignment of characters at the edge of a page.

The application of the first two transforms produces a processed image in which the horizontal lines in the captured image are parallel and horizontal in the processed image, making vertical lines easier to locate.

The step of identifying the vertical clue may be bounded by one or more characteristics of the identified horizontal line bundles. For example, the search may be limited to lines which are substantially orthogonal to the horizontal lines. The search may be limited to lines that are within a predetermined angle from the orthogonal, say, 20 degrees away from orthogonal.

Thus, the invention may reject identified "vertical" lines which do not fall within the boundaries determined from the horizontal lines.

The method of the first aspect of the invention or the second aspect of the invention may include the step of using the focal length of the camera which captured the image as the parameter of the camera. The mapping value may be equal to the focal length, or may be a function of focal length.

The focal length may be stored together with the captured image in a memory. This allows the method of the present invention to be applied at any time after the image is captured.

In a further step, the method of the first aspect of the invention or of the second aspect of the invention may comprise:

identifying a second, different, real or imaginary line corresponding to a different vertical line in the original document;

generating a second vertical transform which when applied to the captured image produces a second processed image in which the identified line and any other lines in the original image are made parallel; and

comparing the two vertical transforms generated using the first and second vertical lines to determine the validity of the two vertical transforms.

By repeating the process using a second, different vertical line or clue the results of the first transform can be verified. If the two vertical transforms are the same, or substantially the same the transform may be deemed reliable. If not, the reliability of the transform may be questioned.

Because the method only requires one vertical line or clue to generate a transform a cross check can be performed when only two vertical clues are known. This is a major advantage over prior art techniques which require the identification of quadrilaterals in the image. To cross check the transform produced using a quadrilateral four different vertical lines are needed. The existence of four vertical clues is very rare in text documents and so such a cross-check is rarely possible.

In an alternative approach, the first aspect of the invention may include the steps of determining the vertical transform by processing the gradient in spacing between horizontal lines in the processed image (optionally after application of the line bundle transform and the rotation). It is envisaged that this method may be predominantly used where no vertical lines are present in the captured image, although it could be used as a general substitute to the use of vertical lines in some embodiments of the invention.

Following application of the method steps to remove horizontal and vertical distortion, the corrected processed image will be free of many of the perspective effects and at the correct orientation but will not have been returned to its original aspect ratio. Although all the right angles in the document will have been restored to right angles, the aspect ratio may be incorrect.

The need for a correct aspect ratio is not essential. For example, of the processed image is to be passed through an optical character recognition programme, the reliability of the recognition of characters will not be affected. However, in some instances, it may be desirable to recover the aspect ratio of the original document.

The method of the first or the second aspect of the invention may therefore comprise the additional steps of:

determining the horizontal and vertical vanishing points for lines in the captured image that correspond to horizontal and vertical lines in the original document,

determining a second mapping value dependent upon the focal length of the camera when capturing the image; and

processing the two vanishing points in combination with the second mapping value to determine the aspect-ratio of the original document.

By aspect ratio we mean a scale factor between lengths in two distinct directions, i.e. horizontal and vertical, in the original image.

The mapping value and the second mapping value may be the same.

The method may comprise generating an aspect ratio transform from the determined aspect ratio which when applied to the captured image together with the horizontal transform and the vertical transform generate a final image having the same aspect ratio as the original document.

It will be appreciated from the above description of a first aspect of the present invention that the step of determining the correct aspect ratio can be applied independently of the other steps of the first aspect of the invention.

Thus in a third aspect the invention provides a method of determining the aspect ratio of a captured image of an original document comprising the steps of:

(a) identifying at least two vertical lines in the captured image,
(b) identifying the orientation of at least two real or illusionary lines of text in the captured image which correspond to horizontal lines in the original image,
(c) determining the director cosines of the four lines,
(d) determining the focal length of the camera when the image was captured; and
(e) processing one or more of the characteristics of the identified lines together with the focal length to produce an aspect ratio transform.

The method of the first, second or third aspects of the present invention may be used to process captured images that are stored in an electronic memory. The resultant processed images may be written to the memory, or may be displayed on a display screen or printed.

The invention is especially suited to the processing of captured images of documents generated using a digital camera.

In a fourth aspect the invention provides image processing apparatus adapted to at least partially remove the effects of perspective distortion from a captured image of a document viewed at an oblique angle, the apparatus comprising:

(a) a text line identifier adapted to identify real and illusionary text lines within the captured image;
(b) a line bundle identifier adapted to identify at least one line bundle in the captured image, the line bundle comprising at least two real or illusionary text lines identified in the image which converge to a single point in the plane of the captured image; and
(c) a line bundle transform generator adapted to generate a line bundle transform for the captured image based upon the characteristics of the identified line bundle which when applied to the captured image generates a processed image in which any real or illusionary lines in the identified line bundle are parallel.

In a fifth aspect the invention provides an image processing apparatus adapted to process an image of an original document captured by a camera viewing the document at an oblique angle, the apparatus comprising:

(a) a horizontal line detector adapted to detect at two real or illusionary text lines in the image of the document, the detected text lines corresponding to two real or illusionary horizontal text lines in the original document,
(b) a vertical line detector means adapted to detect at least one real or illusionary line in an image of a document, the detected line corresponding to a real or illusionary vertical line in the original document,
(c) a focal length determiner adapted to produce a value dependent upon the focal length of the camera for the captured image,
(d) a vertical transform generator adapted to generate a vertical transform by combining the focal length valve with one or more characteristics of the two horizontal text lines and the vertical line; and
(e) a processed image generator adapted to apply the vertical transform to the captured image to generate a processed image in which the vertical line and any lines in the original image that are parallel to that vertical line are orthogonal to the horizontal lines.

In a sixth aspect the invention provides image processing apparatus adapted to process an image of an original document captured by a camera viewing the document at an oblique angle, the apparatus comprising:

(a) vertical line identifier adapted to identify at least two vertical lines in the captured image,
(b) horizontal line identifier adapted to identify the orientation of at least two real or illusionary lines of text in the captured image which correspond to horizontal lines in the original image,
(c) direction determining means adapted to determine the director cosines of the four lines, and
(d) mapping determining means adapted to determine the focal length of the camera when the image was captured; and
(e) combining means adapted to process the identified lines together with focal length value to produce an aspect ratio transform; and
(f) image generation means adapted to apply the aspect ratio transform to the captured image to produce a processed image having the same aspect ratio as the original document.

The apparatus of the fourth, the fifth and the sixth aspects of the invention may further include a camera having a lens with a defined field of view adapted to form an image on the detector of a document within the field of view, and image capture means adapted to produce the captured image of the document which is supplied to the transform generator.

The camera may have a fixed or adjustable focus. It may automatically focus on the document when placed in the field of view. As the focal length of the camera may vary for each image, so may the focal length used to generate the image vary.

According to a seventh aspect of the invention there is provided a computer readable medium which includes a computer program which when run on a processor carries out the method of the first, second or third aspects of the invention or produces apparatus in accordance with the fourth, fifth or sixth aspects of the invention.

The computer readable medium may comprise a physical data carrier such as a magnetic disk or an optically readable disc. Alternatively, it may comprise a signal which encodes the computer program therein.

There will now be described by way of example only one embodiment of the present invention with reference to the accompanying drawings of which:

**Figures 1(a-c)** are three examples of typical captured images of original text documents illustrating different effects of perspective distortion and rotation of an original document;

**Figure 2** is an illustration of an image capture system in accordance with the present invention;

**Figure 3** is a flow diagram providing an overview of the sequence of steps performed by the apparatus of Figure 2 in removing the perspective effects from a captured image;

**Figure 4** is a set of illustrations showing the results of applying each of the steps of Figure 3 to a captured image;

**Figure 5(a)** is an example of a compact blob identified in a captured image;

**Figure 5(b)** is an example of an elongate blob corresponding to a word in the captured image;

**Figure 5(c)** illustrates the formation of an elongate blob or line by joining adjacent elongate blobs in the captured image;

**Figure 6** illustrates the construction of a probabilistic network linking together the blobs identified in the captured image;

**Figure 7** is an illustration showing the location and orientation of the lines identified in the captured image as determined by the probability network of Figure 6;

**Figure 8** illustrates the formation of a line bundle from a captured image comprising lines in the capture image which converge towards a common vanishing point in the image plane;

**Figure 9(a)-(c)** show the effect of translating, rotating and rectifying the lines in the line bundle to remove the effect of perspective distortion on horizontal lines in the captured image;

**Figure 10 (a) to(c)** show the effect of applying the horizontal transform to the images of Figure 1;

**Figure 11** illustrates the presence of vertical lines in a captured image that has been processed to remove horizontal distortion; and

**Figure 12** is a geometric illustration of the spatial relationship between the plane of the captured image ( of known orientation), the optical centre of the camera and the plane of the original document.

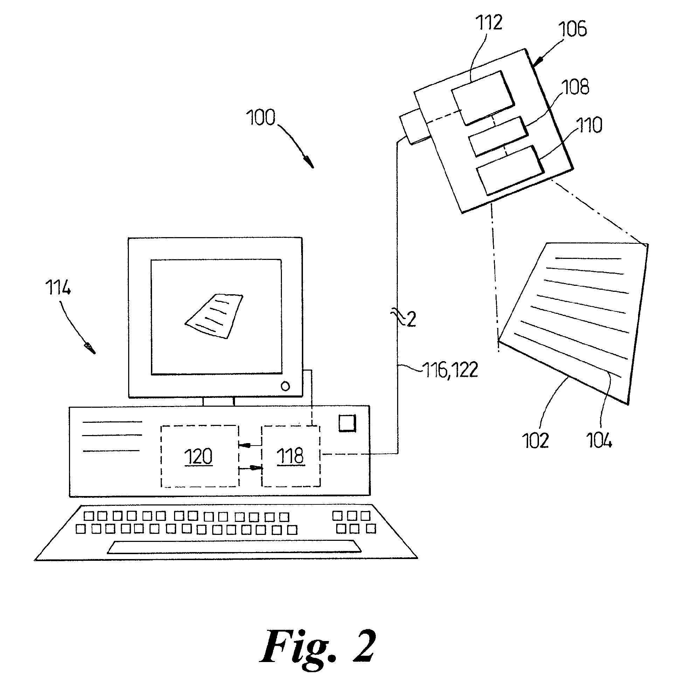

Figure 2 illustrates schematically an image capture system 100 which can be used to capture an image of an original document 102. The original document may typically comprise a sheet of A4, A5 text or a newspaper article which may contain a combination of lines of text 104 and illustrations or perhaps only contain text.

The image capture system 100 comprises a camera 106 having a housing which supports a detector 108 and a lens 110. The detector 108 comprises a planar array of light sensitive elements, such as a charge coupled device (CCD) which is electrically connected to a readout circuit 112 located adjacent the detector 108. The lens 110 has a field of view and directs light from within the field of view onto the detector.

In use the camera 106 is positioned above the original document 102 to be captured and an image of the document 102 is formed on the detector 108. The camera lens includes an autofocus mechanism which places the document 102 in the focal plane of the camera.

A stand is provided (not shown) which supports the camera 106 above the original document 102 and allows the camera 106 to be moved around by the user. This freedom of movement also allows the user to view documents at oblique angles which introduces perspective distortion into the image of the document formed on the detector.

The camera read-out circuit 112 is connected electrically to a personal computer 114 by a length of electrical cable 116. The computer could, in an alternative, be a hand-held computer, a mini computer or a mainframe computer running in a distributed network of other computers.

The cable 116 enables images captured by the camera detector 108 to be down-loaded to the personal computer 114 for storage in a memory 118. The captured image can be subsequently processed by the processor of the personal computer 114. A second electrical cable 122 allows the personal computer to transmit signals to the readout circuit 112 which tell the circuit when an image is to be captured. As such, the read-out circuit 112 performs the function of an electronic shutter eliminating the need for a mechanical shutter over the detector 108.

The captured image is stored in a memory within the personal computer and can be displayed on a display screen 124 connected to the processor 120. The image is an exact replica of the image formed on the detector 108 of the camera. Whilst all of the visual data present in the original document will be correctly reproduced in the captured image, the oblique angle of incidence of the camera will introduce distortions in the captured image.

The memory 118 of the personal computer 114 contains amongst other things the basic operating system which controls operation of the basic hardware functions of the computer such as the interaction between the processor and the memory or the camera read-out circuitry. The memory also contains a set of instructions defining a program which can be implemented by the processor. When implemented by the processor the programme causes the processor to generate on or more transforms or mappings. When applied to the captured image the transforms produce a final processed image which is substantially free of the effects of perspective distortions.

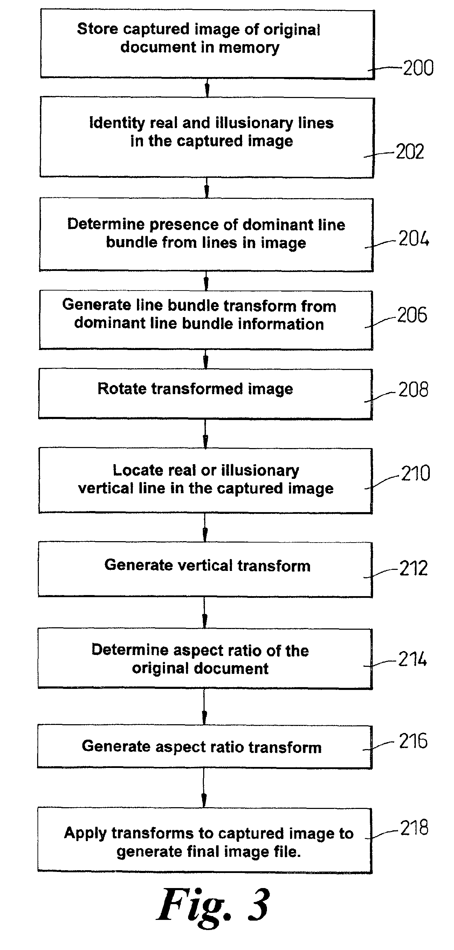

The programme which runs on the processor performs several distinct steps as illustrated in the flow diagram of Figure 3 of the accompanying drawings.

In a first step 200 the image of the original document is captured. Lines in the captured image are then identified 202, and from these lines the presence of line bundles in the captured image are determined 204. The dominant bundle is then identified as this is statistically most likely to correspond to the horizontal lines of text in the original document. This allows a line bundle transform to be produced 206 based on the characteristics of the line bundle. This transform is a mapping that warps each point in the captured image to a new frame in which all the lines in the bundle are parallel.

Having identified the horizontal lines and made them parallel the image is rotated 208 so that the horizontal lines in the original document are horizontal in the processed image. This rotational step assists in the subsequent identification 210 of a vertical clue- such as a real or illusionary line in the captured image that corresponds to a real or illusionary vertical line in the original document. A vertical transform is then produced 212 by combining characteristics of the horizontal lines, the one vertical clue and the focal length of the camera.

In the final steps the aspect ratio of the original image is determined 214 and a suitable transform is generated 216 which corrects the aspect ratio of the captured image. The final processed image is produced 218 by applying all the transforms and the rotation to the captured image by applying determined transforms.

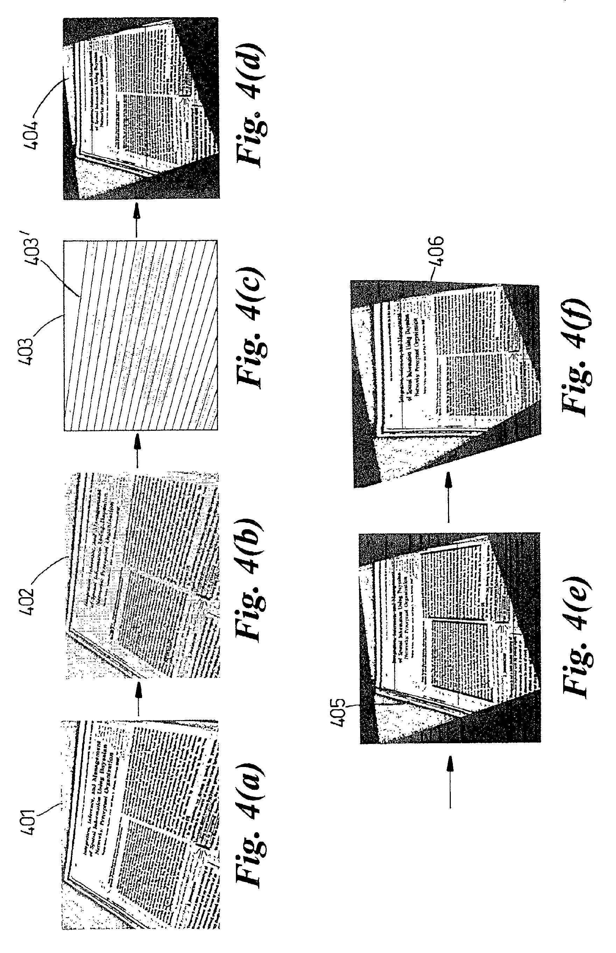

Each of the steps performed by the processor are described in further detail hereinafter. For ease of reference the reader is referred to Figure 4 of the accompanying drawings which provides a graphical illustration of the effect of each stage of the method on the captured image of a sample text document.

**Identify lines in the captured image.**

Initially, the captured image is binarised. This is illustrated in Figure 4(a) of the accompanying drawings which shows a binarised image 401 produced from a captured image of an original text document. The threshold allocates to each point in the captured image the value one or zero. For black text on a white background or dark text on a paler background the binarisation has the effect of sharpening the captured text in the captured image. Dark points are allocated the value 1, whilst light points are allocated the value 0.

After binarisation, the thresholded captured image is analysed to detect the presence of both compact blobs and elongate blobs in the image. A blob is a grouping of image points within the capture image. A compact blob is an area of the image where a small feature such as a text character or numeral or group of text characters are present.

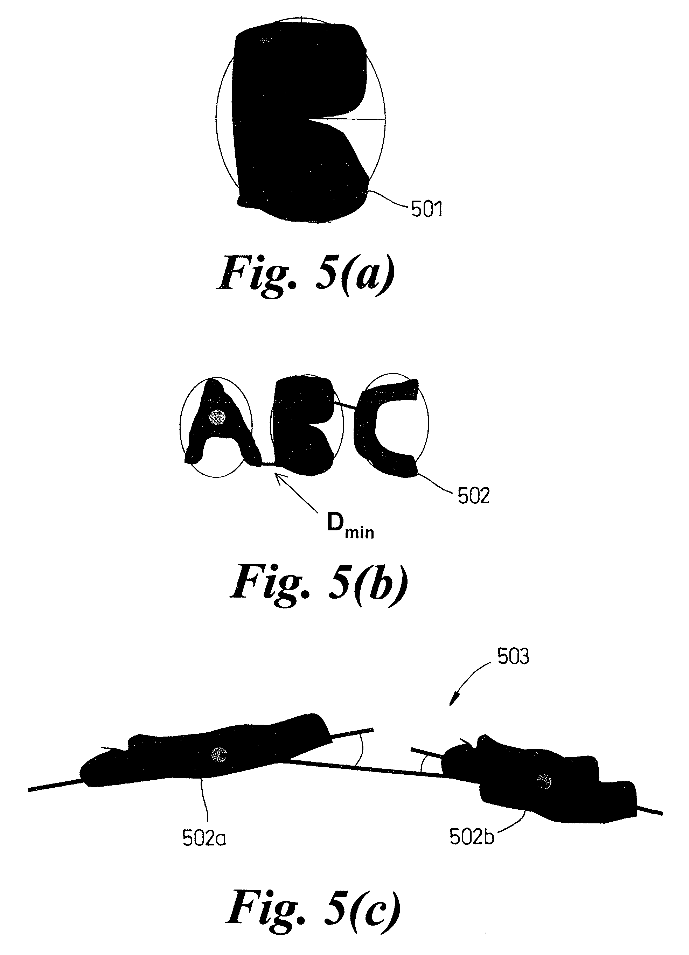

The compact blobs are identified by locating islands of dark points surrounded by light points in the captured image. If the processor identifies all such groups in which dark points are immediately adjacent other dark points in the image then a set of compact blobs which each correspond to one character will be identified. An example 501 of such compact blobs is illustrated in Figure 5(a) of the accompanying drawings.

The processor may group compact blobs together if they are spaced apart by a distance D less than a pre-determined maximum spacing $D_{max}$ to form elongate blobs. These elongate blobs will either correspond to individual words or may correspond to entire sentences depending on the resolution of the captured image or the value chosen for Dmax. An example 502 of an elongate blob at a word level is illustrated in Figure 5(b) of the accompanying drawings.

Elongate blobs 502 are more useful than compact blobs 501 because the major axis of the elongate blob 502 will generally indicate the presence of a line. The association of elongate blobs can be made in a number of ways. For example, if two adjacent elongate blobs 502a, 502b share a common major axis the two blobs may be associated to form a larger elongate blob or line marker 503. This link can also be made if the angle between the major axis of each elongate blob is small. An example 503 of a line marker is illustrated in Figure 5(c) of the accompanying drawings for a small area of captured text.

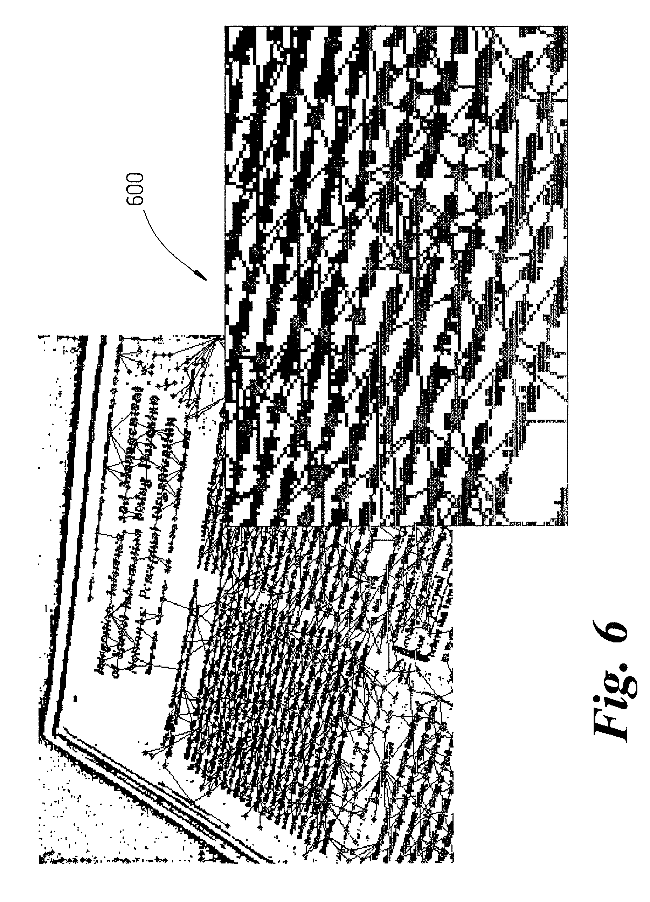

Having identified the presence of elongate blobs 502 or line markers 503 and compact blobs 501 in the captured image a probabilistic network is then constructed. This network links together adjacent blobs and assigns a probability value to each link. An example 600 of such a network is illustrated in Figure 6 of the accompanying drawings for a representative captured image of a text document. It is to be noted that Figure 6 only shows three links for each line marker which have the highest probability rating.

The probability of each blob-to-blob link can be determined in several ways that reflect the saliency of the pair. The method we employed is the following.

We define two measures, the relative minimum distance (RMD) and the blob dimension ratio (BDR) as

$$RMD = \frac{D_{min}}{\min(A_{1min} + A_{2min})}$$

and

$$BDR = \frac{A_{1max} + A_{1min}}{A_{2max} + A_{2min}}$$

where $D_{min}$ is the minimum blob-to-blob distance as illustrated in Figure 5(b) and $A_{1min}$ and $A_{1max}$ are the minor and major axis, respectively, of the and approximating ellipse representing a first blob 501 as shown in Figure 5(a).

Using these two measures, we can define (heuristically) two Gaussian priors on these measurements, one for compact blobs and one for elongated blobs, respectively:

$$P_C = N(BDR,1,2) \cdot N(RMD,0,4)$$

$$P_E = N(RMD,0,4) \cdot N(\alpha,0,5°)$$

where $N(x,m,v)$ is a Gaussian distribution on the variable $x$ with mean $m$ and variance $v$ and $\alpha$ is a measure of the orientation of an elongated blob (for example, the angle between the major axes of two elongated blobs). Finally, we define the blob-to-blob link probability as

$$P = \begin{cases} P_c & \text{if both blobs are compact} \\ \max(P_c, P_e) & \text{if either or both blobs are elongated} \end{cases}$$

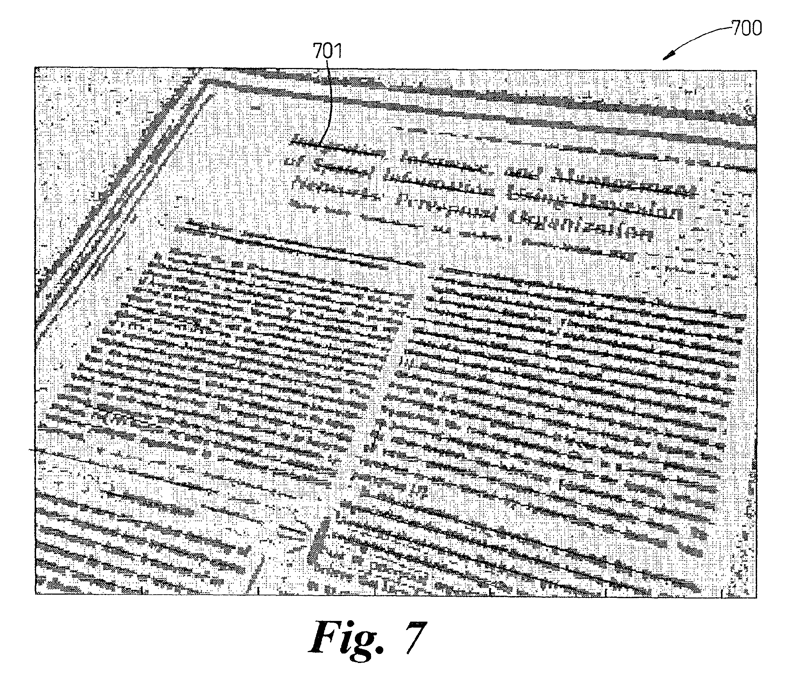

Finally, the probabilistic network is searched to identify elongate lines within the captured image. Figure 7 illustrates the results 700 of the robust line identification process with all the identified lines shown. One of the lines has been indicated by the reference numeral 701 and for clarity the lines are shown overlaying the captured image.

Figure 4(b) also shows the results of identifying the lines present in the binarised image of Figure 4(a) of the accompanying drawings.

**Identification of the dominant line bundle.**

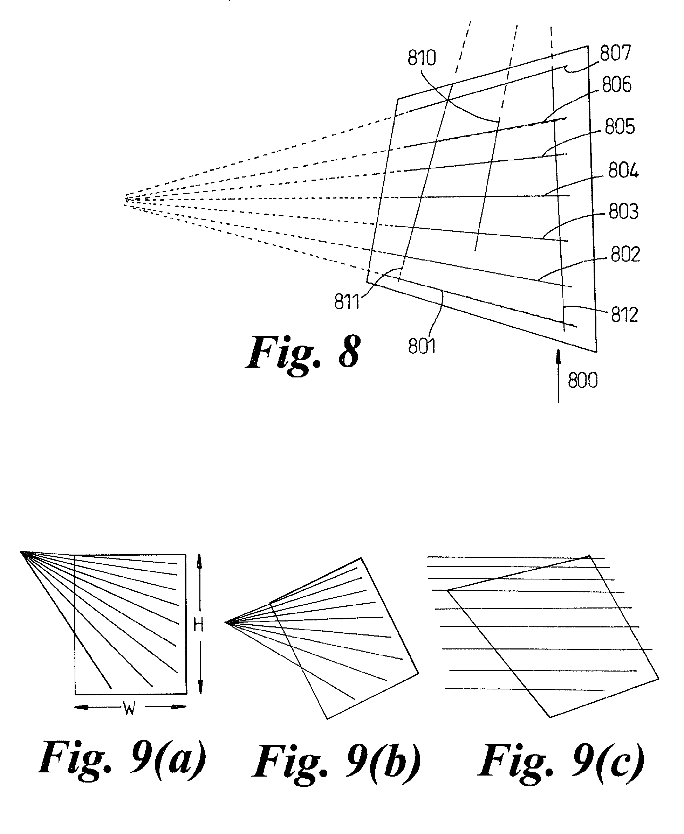

Having identified real and imaginary lines 701 within the binarised captured image, the image content of the binarised captured image is processed to identify the presence of a line bundle corresponding to at least two lines which are parallel in the original image. In practice, where the image is a text document at least one line bundle will exist which is defined by the horizontal lines of text forming a paragraph or a set of paragraphs. As such, a line bundle having as many lines as there are lines of text in the original can be identified. In general the lines of a line bundle will allow intersect at a common vanishing point and the processor exploits this feature to fit lines in the image to line bundles. This is illustrated in Figure 8 of the accompanying drawings. In the example, a document 800 contains seven identified lines 801,802,803,804,805,806,807 falling within a first line bundle. The document also contains three further lines 810,811,812 that correspond to a second bundle.

Referring to Figure 4(c) an image 403 of the lines 403' of the dominant line bundle identified in the binarised image 401 of Figure 4(a) is shown.

Having identified all the line bundles in a captured image, the line bundles are processed to identify the dominant line bundle on the assumption that the bundle with the greatest number of member lines will correspond to the horizontal lines in the original image. In the example of Figure 8 this assumption is clearly true. The assumption can also be shown to be valid for the examples of Figures 1(a-c) and the image 401 of Figure 4(a).

The dominant line bundle can be expressed in Cartesian co-ordinates with respect to the x-y co-ordinate system of the captured image as:

$$y - y_o = m(x - x_0)$$

**Generate line bundle transform and rotation transform**

Having identified the presence of the dominant line bundle, the processor next determines the line vector for two of the lines of the bundle. For convenience, it can be assumed that the captured image lies in a two dimensional plane where each point in the plane can be uniquely described by its Cartesian co-ordinates x and y (as used to define the line bundle). This is illustrated in Figure 9(a) of the accompanying drawings. The method is based on the teachings of R.I. Hartley in "Theory and Practice of Projective Rectification", International Journal of Computer Vision, 35(2):1-16, November 1999.

Let $V_x$ and $V_y$ be the co-ordinates of the centre of the bundle expressed in the Cartesian reference system, and H and W be the height and width of the captured image.

Firstly, the bundle is translated by an amount ($t_x$=-W/2, $t_y$=-H/2). This translation places the centre of the captured image at the origin of the x-y co-ordinate system in the image frame.

The translated image is next rotated about an angle

$$\theta = \arctan\left(\frac{v_y}{v_x}\right).$$

The rotation ensures that all points on a real illusionary centre line of the line bundle lie along the x axis in the co-ordinate frame. This is illustrated in Figure 9(b) of the accompanying drawings.

The lines of the bundle are then "thrown" out to infinity by moving the co-ordinates of the centre of the line bundle from [($v_x$ - $t_x$),0] to [-∞,0]. This has the effect of making any lines belonging to the bundle horizontal. This is illustrated in Figure 9(c) of the accompanying drawings.

Finally, the initial translation is reversed to return the overall image to its original position.

The overall homography comprising these transformations can be expressed as a single function:

$$F = T^{-1}KRT$$

where

$$T = \begin{bmatrix} -1 & 0 & -t_x \\ 0 & 1 & -t_y \\ 0 & 0 & 1 \end{bmatrix} \quad R = \begin{bmatrix} \cos(\theta) & \sin(\theta) & 0 \\ -\sin(\theta) & \cos(\theta) & 0 \\ 0 & 0 & 1 \end{bmatrix} \quad k = \begin{bmatrix} 1 & 0 & 0 \\ 0 & 1 & 0 \\ \dfrac{-1}{v_x - v_y} & 0 & 1 \end{bmatrix}$$

which are respectively the translation, rotation and rectification transforms in projective co-ordinates.

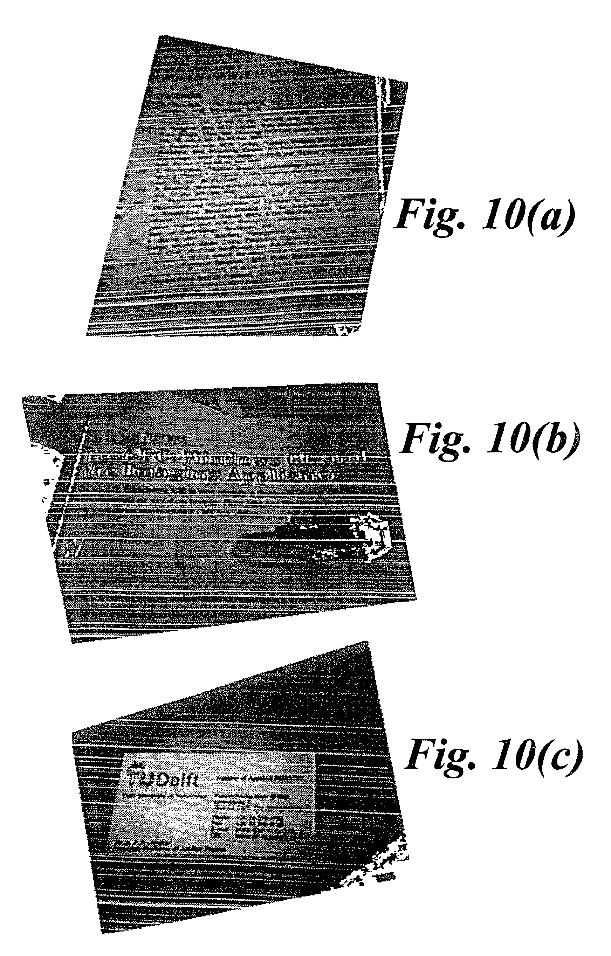

Figure 10(a) to (c) illustrate the results that have been obtained by applying this method to the three sample images illustrated in Figures 1(a) to (c). It is apparent that the horizontal text lines have been rectified and are also horizontal in the processed images. In the case of the example in Figure 1(a) this rotation has corrected for an almost 90 degree error in the original orientation of the camera relative to the text.

The image 404 of Figure 4(d) of the accompanying drawings illustrates the effect of applying the line bundle transform and the rotation to the binarised image 401 of Figure 4(a).

**Identify vertical clue and determine vertical transform**

The combined rotation and line bundle transform removes some of the perspective distortions from the image by making the horizontal lines in the original image appear horizontal in the processed image. However, this will not have removed residual distortion that arises if the camera is at an oblique angle relative to an imaginary horizontal axis through the plane of the original document. These residual effects are clearly visible in Figures 10(a) to (c) of the accompanying drawings.

To remove this residual perspective effect the processor generates an additional transform to apply to the image.

Generally, for a document that contains only text there will be no real vertical lines present which can be identified to form a vertical line bundle. Of course, if such vertical lines are present, as may be the case with a document having many columns of left and right justified text, the process applied for the horizontal bundle can simply be repeated for the vertical bundle.

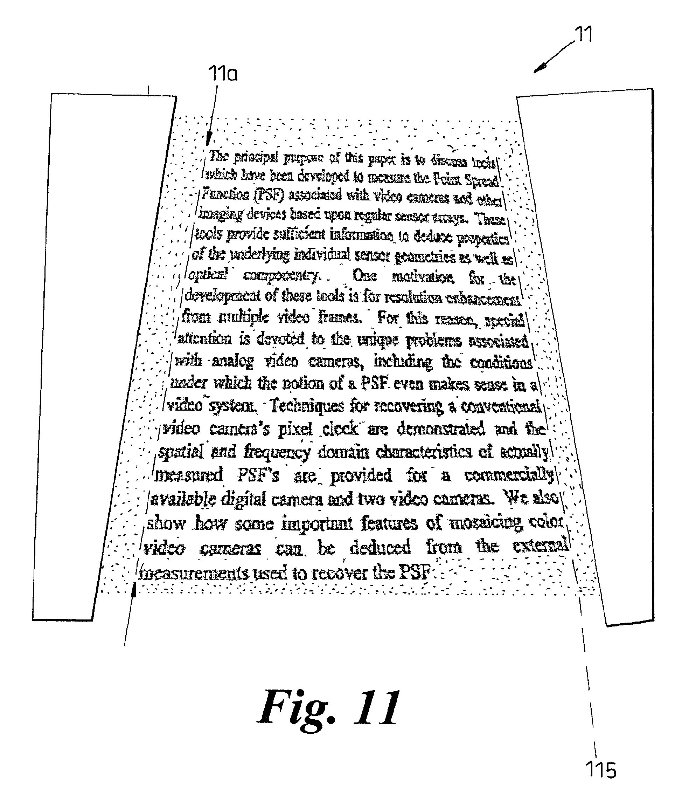

In most documents only one vertical line may be present. This is often an illusionary line formed by left-hand justification of the text on the page as it is aligned with the left hand margin. An example of such an illusionary line is shown in the captured image 11 illustrated Figure 11 of the accompanying drawings. It is to be noted that two vertical illusionary lines 11a and 11b and are present in this illustration as the text on the original document has been right-hand justified. Similarly, Figure 4(e) illustrates the presence of vertical lines 405 in the processed image of Figure 4(d).

These vertical lines or "clues" may be identified using the probabilistic network. The ends of elongate and compact blobs are analysed. Of course, at this point it is unknown if the identified vertical line is actually a vertical line in the original document- it can only be an estimate. If an actual rather than an illusionary vertical line is present-such as a edge- an alternative process such as a Hough transform can be utilised.

Using only a single vertical line identified in the captured image together with a knowledge of the focal length of the camera the vanishing point for all corresponding lines (i.e. those lines parallel to the vertical line in the original document) can be determined. By focal length we mean the back focal length of the lens, which is an intensive property of the lens itself

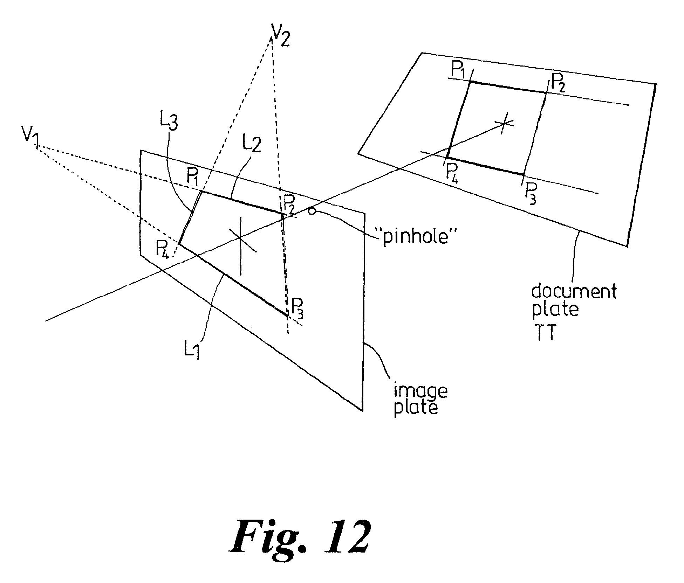

Using the vanishing point determined for the horizontal lines in the horizontal line bundle, denoted v1x and v1y in the captured image plane shown in Figure 12 of the accompanying drawings, two arbitrary horizontal lines can be defined which form part of the horizontal line bundle as:

$$L_1 = (y - v_{1y}) = m_1(x - v_{1x})$$

$$L_2 = (y - v_{1y}) = m_2 (x - v_{1x})$$

These two lines are also illustrated in Figure 12 of the accompanying drawings. This illustration shows the projective geometry used to determine the vertical line bundle from a single vertical line. The vanishing point for the horizontal bundle is also illustrated, and the relationship between the original image, the captured image plane and the lens of the camera is also shown.

The single known vertical line may also be expressed as:

$$L_3 = a_3x + b_3y + c_3 = 0$$

where a3, b3 and c3 are known constants for the line.

By trivial algebra the three line equations can be transformed into their parametric Cartesian forms taking care to avoid singularities:

$$L_n = \left\{ \left( \frac{x}{y} \right) + \left( \frac{c_n}{d_n} \right) + \eta \left( \frac{g_n}{h_n} \right) \right\}$$

for n=1,2,3

Since it is known that the lines L1 and L2 rise from two parallel lines in a plane (the plane of the original image) it can be shown that the director cosines of the corresponding 3D lines are given by:

$$\begin{pmatrix} \alpha_{1,2} \\ \beta_{1,2} \\ \gamma_{1,2} \end{pmatrix} = \pm \frac{\begin{pmatrix} h_1 f \\ -g_1 f \\ d_1 g_1 - c_1 h_1 \end{pmatrix} \times \begin{pmatrix} h_2 f \\ -g_2 f \\ d_2 g_2 - c_2 h_2 \end{pmatrix}}{\left\| \begin{pmatrix} h_1 f \\ -g_1 f \\ d_1 g_1 - c_1 h_1 \end{pmatrix} \times \begin{pmatrix} h_2 f \\ -g_2 f \\ d_2 g_2 - c_2 h_2 \end{pmatrix} \right\|}$$

This equation is based upon the unrelated teachings of R.M. Haralick in "Monocular Vision using Inverse Perspective Projection Geometry" CVPR89, pages 370 to 378, 1989.

In this equation f is the focal length which is uniquely defined for each lens in a system and in this application is considered to be the focal length of the optical lens assembly which directly light from a document at distance Z in front of the lens onto the detector at a distance behind the lens according to the formula:

$$\frac{1}{Z} + \frac{1}{z} = \frac{1}{f}$$

The director cosine of the third line may next be calculated using the limitation that the line must be orthogonal to the two horizontal lines and in the same plane as the two horizontal lines

$$\begin{pmatrix} \alpha_3 \\ \beta_3 \\ \gamma_3 \end{pmatrix} = \pm \frac{\begin{pmatrix} \alpha_1 \\ \beta_1 \\ \gamma_1 \end{pmatrix} \times \begin{pmatrix} h_3 f \\ -g_3 f \\ d_3 g_3 - c_3 h_3 \end{pmatrix}}{\left\| \begin{pmatrix} \alpha_1 \\ \beta_1 \\ \gamma_1 \end{pmatrix} \times \begin{pmatrix} h_3 f \\ -g_3 f \\ d_3 g_3 - c_3 h_3 \end{pmatrix} \right\|}$$

Once, the director cosines of the vertical line are known, the vanishing point that would arise if there were a multitude of these (parallel) lines in space is given by:

$$v_{3x} = f\frac{\alpha_3}{\gamma_3} \text{ and } v_{3y} = f\frac{\beta_3}{\gamma_3}$$

The knowledge of the second vanishing point allows the orientation of the plane of the original document to be fully defined. From the knowledge of the plane of the original document a transform which removes the effect of perspective distortion can be determined.

For example, from a knowledge of the second vanishing point, two theoretical vertical lines can be plotted in the captured image plane and the technique used to translate, rotate and rectify the horizontal line bundle may be applied to this theoretical vertical line bundle.

**Determine aspect ratio of the original image**

The transforms determined for the horizontal lines (using the knowledge of the line bundle), and the vertical lines (using the knowledge of the horizontal lines, one vertical line and the focal length of the camera) remove the majority of the perspective effects from the captured image. All horizontal lines appear horizontal in the processed image and all the vertical lines appear vertical and orthogonal to the horizontal lines. This is illustrated by the example image 405 shown in Figure 4(e) of the accompanying drawings.

Despite this considerable improvement in the appearance of the processed image the aspect ratio of the processed image will not necessarily be the same as the aspect ratio of the original document. By this we mean that the ratio of the height of the original document to the width may not be same as the ratio of the height of the processed image to its width.

The processor therefore performs further processing steps to restore the aspect ratio of the original image (or make a reasonably accurate estimate of the aspect ratio). This is achieved by combining the focal length of the camera with the knowledge of the two vanishing points.

From the knowledge of the two vanishing points the orientation in space of the plane containing the original image can be determined. Unfortunately, the vanishing points alone do not provide sufficient information to determine the aspect ratio as this will vary in the captured image depending upon the distance of the original document form the camera.

Using a geometric construction, two horizontal lines and two vertical lines that extend from the two vanishing points are determined. These need not be actual real or illusionary lines in the captured image. The four lines form a quadrilateral having corners located at the points in the captured image plane:

$$p_1 = [u_1 \ v_1 \ 1]^T \quad p_2 = [u_2 \ v_2 \ 1]^T \quad p = [u_3 \ v_3 \ 1]^T \quad p_4 = [u_4 \ v_4 \ 1]^T$$

The four lines that intersect to form these four points can be defined as:

$$l_1 = \overline{p_1 \ p_2} \qquad l_2 = \overline{p_4 \ p_3} \qquad l_{31} = \overline{p_2 \ p_3} \qquad l_4 = \overline{p_1 \ p_4}$$

In parametric form the four lines can be expressed as:

$$l_n = \left\{ \begin{pmatrix} x \\ y \end{pmatrix} \begin{pmatrix} c_n \\ d_n \end{pmatrix} + \eta \begin{pmatrix} g_n \\ h_n \end{pmatrix} \right\} \quad , \text{ for } n = 1 \text{ to } 4.$$

As described in connection with the identification of the second vanishing point, the director cosines of the lines L1,2 and L3,4 in the plane of the original document corresponding to the projection onto the image plane of the lines 11,2,3,4 are:

$$\begin{pmatrix} \alpha_{1,2} \\ \beta_{1,2} \\ \gamma_{1,2} \end{pmatrix} = \pm \frac{\begin{pmatrix} h_1 f \\ -g_1 f \\ d_1 g_1 - c_1 h_1 \end{pmatrix} \times \begin{pmatrix} h_2 f \\ -g_2 f \\ d_2 g_2 - c_2 h_2 \end{pmatrix}}{\left\| \begin{pmatrix} h_1 f \\ -g_1 f \\ d_1 g_1 - c_1 h_1 \end{pmatrix} \times \begin{pmatrix} h_2 f \\ -g_2 f \\ d_2 g_2 - c_2 h_2 \end{pmatrix} \right\|}$$

And similarly for

$$\begin{pmatrix} \alpha_{3,4} \\ \beta_{3,4} \\ \lambda_{3,4} \end{pmatrix}$$

The plane normal for the original document plane is then given by the cross product of these two orthogonal unit vectors:

$$N = \begin{pmatrix} A \\ B \\ C \end{pmatrix} = \begin{pmatrix} \alpha_1 \\ \beta_1 \\ \gamma_1 \end{pmatrix} \times \begin{pmatrix} \alpha_3 \\ \beta_3 \\ \gamma_3 \end{pmatrix}$$

Let us now place the document plane at a distance Z0 from the optic centre of the camera system such that Z=Z0 for x,y=0. This plane T is then given by:

$$\Pi : AX + BY + CZ + D = 0 \text{ where } D = -CZ_0$$

having determined the relative locations of the captured image plane and the document plane with respect to the optic centre, four rays can then be constructed which pass from each corner of the quadrilateral in the image plane through the optic centre of the camera system (i.e. the hole in a pin hole model of the camera and lens system) to intersect the document plane. These four optic rays are illustrated by the dotted lines in Figure 11 of the accompanying drawings. The four optic rays $R_i = O_{pi}$ may be represented in parametric form:

$$R_i = \begin{cases} x_i = tu_i \\ y_i = tv_i \\ z_i = tf \end{cases}$$

Substituting in the plane equation and solving for each ti gives:

$$t_i = \frac{-D}{Au_i + Bv_i + Cf}$$

and hence the four points that when projected onto the image plane give the four corners pi of the quadrilateral are:

$$P_i = \begin{cases} x_i = \dfrac{-CZ_0}{Au_i + Bv_i + Cf} u_i \\[2mm] y_i = \dfrac{-CZ_0}{Au_i + Bv_i + Cf} v_i \\[2mm] z_i = \dfrac{-CZ_0}{Au_i + Bv_i + Cf} f \end{cases}$$

Using trivial mathematics, the aspect ratio can be recovered in a trivial way as A=W/H=$\overline{p_1 p_2}$.

It is important to note that the selection of the value of $Z_0$ does not affect the aspect ratio if a different value were selected only a uniform scaling of the four points in the document plane would arise.

**Generate final image by applying determined transforms.**

Once the various transforms have been generated the processor maps the points in the captured image onto a new image plane to form the final image. This final image 406 is illustrated in Figure 4(f) of the accompanying drawings.

**Claims**

1.   A method of at least partially removing the effect of perspective distortion from a captured image of a document viewed at an oblique angle, the method **characterised by** the steps of:

    (a) identifying (202) real and illusionary text lines (701) within the captured image;
    (b) identifying (204) at least one line bundle in the captured image, the line bundle comprising at least two real or illusionary text lines (701) identified in the image which converge towards a single point; and
    (c) generating (206) a line bundle transform for the captured image based upon one or more of the characteristics of the identified line bundle which when applied to the captured image generates a processed image in which any real or illusionary lines in the identified line bundle are parallel.

2.   A method according to claim 1 **characterised in that** the one or more characteristics include the position of the line bundle in the captured image and the relative position of the point towards which the lines of the bundle converge.

3.   A method according to claim 1 or claim 2 **characterised by** further comprising identifying the dominant bundle in the captured image and generating (206) the line bundle transform based on one or more of the characteristics of this dominant bundle.

4.   A method according to claim 3 **characterised by** further comprising identifying all the line bundles in the captured image, comparing the number of lines in the captured image corresponding to each line bundle, and retaining the line bundle containing the greatest number of real or illusionary lines.

5.   A method according to any preceding claim **characterised by** the further step of generating a rotation transform to be applied together with the line bundle transform to generate a processed image in which the parallel lines of the line bundle extend horizontally.

6.   A method according to any one of claims 3 to 5 **characterised by** the steps of generating the line bundle transform by determining the line vector for a first line in the dominant line bundle, determining the line vector for a second line in the dominant line bundle, determining the point in the plane of the captured image at which the two line vectors intersect, and mapping the image onto a new plane in which the point of intersection is projected to a point at infinity.

7. A method according to any preceding claim **characterised by** further including the steps of identifying a line bundle in the captured image corresponding to vertical lines in the original image, the line bundle including at least two real or imaginary lines identified in the captured image which converge to a single point, and generating a second line bundle transform based upon the characteristics of this second line bundle.

8. A method according to any one of claims 1 to 6 which is further **characterised by** the steps of:

   detecting at least one real or illusionary line in the captured image which corresponds to a real or illusionary vertical line in the original document,
   determining a mapping value dependent upon the focal length of the camera which captured the image of the original document,
   and generating a vertical transform by combining the distance value with one or more characteristics of the at least one vertical line and one or more characteristics of the horizontal line bundle.

9. A method according to claim 8 which is further **characterised by** the step of applying the vertical transform to the captured image to produce a processed image in which the vertical line and any lines in the original image that are parallel to that identified line are parallel in the processed image.

10. A method adapted at least partially to remove perspective distortion in a captured image of an original document generated using a camera aligned at an oblique angle to the plane of the original document is provided, the method **characterised by** the steps of:

    detecting at least two real or illusionary text lines in the image of the document, the detected text lines corresponding to two real or illusionary horizontal text lines in the original document,
    detecting at least one real or illusionary line in the image of the document, the detected line corresponding to a real or illusionary vertical line in the original document,
    determining a value dependent upon the focal length of the camera for the captured image,
    and generating a vertical transform by combining the mapping value with one or more characteristics of the two horizontal text lines and one or more characteristics of the vertical line.

11. A method according to any one of claims 8, 9 or 10 **characterised in that** the step of identifying the real or illusionary vertical line is bounded by one or more characteristics of the identified horizontal line bundles.

12. A method according to any one of claims 8 to 11 which is additionally **characterised by** the steps of:

    identifying a second, different, real or imaginary line corresponding to a different vertical line in the original document;
    generating a second vertical transform which when applied to the captured image produces a second processed image in which the identified line and any other lines in the original image are made parallel; and
    comparing the two vertical transforms generated using the first and second vertical lines to determine the consistency of the two vertical transforms.

13. A method according to any preceding claim which is **characterised by** further comprising:

    determining the horizontal and vertical vanishing points for lines in the captured image that correspond to horizontal and vertical lines in the original document,
    determining a mapping value dependent upon the focal length of the camera; and
    processing the two vanishing points in combination with the distance value to determine the aspect-ratio of the original document.

14. The method of claim 13 which is **characterised by** further comprising generating an aspect ratio transform from the determined aspect ratio which when applied to the captured image together with the horizontal transform and the vertical transform generate a final image having the same aspect ratio as the original document.

**15.** A method of determining the aspect ratio of a captured image of an original document **characterised by** the steps of:

(a) identifying at least two vertical lines in the captured image,
(b) identifying the orientation of at least two real or illusionary lines of text in the captured image which correspond to horizontal lines in the original image,
(c) determining the director cosines of the four lines,
(d) determining the focal length of the camera when the image was captured; and
(e) processing one or more of the characteristics of the identified lines together with the focal length to produce an aspect ratio transform.

**16.** Image processing apparatus adapted to at least partially remove the effects of perspective distortion from a captured image of a document viewed at an oblique angle, the apparatus **characterised by**:

(a) a text line identifier adapted to identify real and illusionary text lines within the captured image;
(b) a line bundle identifier adapted to identify at least one line bundle in the captured image, the line bundle comprising at least two real or illusionary text lines identified in the image which converge to a single point in the plane of the captured image; and
(c) a line bundle transform generator adapted to generate a line bundle transform for the captured image based upon the characteristics of the identified line bundle which when applied to the captured image generates a processed image in which any real or illusionary lines in the identified line bundle are parallel.

**17.** Image processing apparatus adapted to process an image of an original document captured by a camera viewing the document at an oblique angle, the apparatus **characterised by** comprising:

(a) a horizontal line detector adapted to detect at two real or illusionary text lines in the image of the document, the detected text lines corresponding to two real or illusionary horizontal text lines in the original document,
(b) a vertical line detector means adapted to detect at least one real or illusionary line in an image of a document, the detected line corresponding to a real or illusionary vertical line in the original document,
(c) a focal length determiner adapted to produce a value dependent upon focal length of the camera for the captured image,
(d) a vertical transform generator adapted to generate a vertical transform by combining the focal length value with one or more characteristics of the two horizontal text lines and the vertical line; and
(e) a processed image generator adapted to apply the vertical transform to the captured image to generate a processed image in which the vertical line and any lines in the original image that are parallel to that vertical line are orthogonal to the horizontal lines.

**18.** Image processing apparatus adapted to process an image of an original document captured by a camera viewing the document at an oblique angle, the apparatus **characterised by** comprising:

(a) vertical line identifier adapted to identify at least two vertical lines in the captured image,
(b) horizontal line identifier adapted to identify the orientation of at least two real or illusionary lines of text in the captured image which correspond to horizontal lines in the original image,
(c) direction determining means adapted to determine the director cosines of the four lines, and
(d) focal length determining means adapted to determine the focal length of the camera when the image was captured; and
(e) combining means adapted to process the identified lines together with focal length value to produce an aspect ratio transform; and
(f) image generation means adapted to apply the aspect ratio transform to the captured image to produce a processed image having the same aspect ratio as the original document.

**19.** Image processing apparatus according to any one of claims 16, 17 or 18 which is **characterised by** further including a camera having a lens with a defined field of view adapted to form an image on the detector of a document within the field of view, and image capture means adapted to produce the captured image of the document which is supplied to the transform generator.

**20.** A data carrier which includes a computer program which when run on a processor carries out the method of the first, second or third aspects of the invention or produces apparatus in accordance with any one of claims 1 to 19.

*Fig. 1(a)*

*Fig. 1(b)*

*Fig. 1(c)*

*Fig. 2*

```
┌─────────────────────────────────┐
│   Store captured image of original│ ─200
│      document in memory          │
└─────────────────────────────────┘
              │
              ▼
┌─────────────────────────────────┐
│  Identity real and illusionary lines│ ─202
│       in the captured image      │
└─────────────────────────────────┘
              │
              ▼
┌─────────────────────────────────┐
│  Determine presence of dominant line│ ─204
│      bundle from lines in image  │
└─────────────────────────────────┘
              │
              ▼
┌─────────────────────────────────┐
│   Generate line bundle transform from│ ─206
│      dominant line bundle information│
└─────────────────────────────────┘
              │
              ▼
┌─────────────────────────────────┐
│       Rotate transformed image   │ ─208
└─────────────────────────────────┘
              │
              ▼
┌─────────────────────────────────┐
│       Locate real or illusionary │ ─210
│   vertical line in the captured image│
└─────────────────────────────────┘
              │
              ▼
┌─────────────────────────────────┐
│      Generate vertical transform │ ─212
└─────────────────────────────────┘
              │
              ▼
┌─────────────────────────────────┐
│    Determine aspect ratio of the │ ─214
│        original document         │
└─────────────────────────────────┘
              │
              ▼
┌─────────────────────────────────┐
│     Generate aspect ratio transform│ ─216
└─────────────────────────────────┘
              │
              ▼
┌─────────────────────────────────┐
│  Apply transforms to captured image to│ ─218
│      generate final image file.  │
└─────────────────────────────────┘
```

## Fig. 3

**Fig. 4(a)**

**Fig. 4(b)**

**Fig. 4(c)**

**Fig. 4(d)**

**Fig. 4(e)**

**Fig. 4(f)**

EP 1 235 181 A2

**Fig. 5(a)**

$D_{min}$

**Fig. 5(b)**

**Fig. 5(c)**

*Fig. 6*

*Fig. 7*

**Fig. 8**

**Fig. 9(a)**     **Fig. 9(b)**     **Fig. 9(c)**

Fig. 10(a)

Fig. 10(b)

Fig. 10(c)

11

11a

The principal purpose of this paper is to discuss tools which have been developed to measure the Point Spread Function (PSF) associated with video cameras and other imaging devices based upon regular sensor arrays. These tools provide sufficient information to deduce properties of the underlying individual sensor geometries as well as optical componentry. One motivation for the development of these tools is for resolution enhancement from multiple video frames. For this reason, special attention is devoted to the unique problems associated with analog video cameras, including the conditions under which the notion of a PSF even makes sense in a video system. Techniques for recovering a conventional video camera's pixel clock are demonstrated and the spatial and frequency domain characteristics of actually measured PSF's are provided for a commercially available digital camera and two video cameras. We also show how some important features of mosaicing color video cameras can be deduced from the external measurements used to recover the PSF.

*Fig. 11*

115

**Fig. 12**